# EUROPÄISCHE PATENTSCHRIFT

(11) **EP 3 682 118 B1**
(45) Veröffentlichungstag und Bekanntmachung des Hinweises auf die Patenterteilung: **08.03.2023**
(21) Anmeldenummer: 18746169.4
(22) Anmeldetag: 25.07.2018
(51) Int. Cl.: F04D 27/02, F04D 29/42, F16K 3/03

(54) **RADIALVERDICHTER MIT EINEM IRISBLENDENMECHANISMUS FÜR EINE AUFLADEVORRICHTUNG EINES VERBRENNUNGSMOTORS, AUFLADEVORRICHTUNG UND LAMELLE FÜR DEN IRISBLENDENMECHANISMUS**
RADIAL COMPRESSOR HAVING AN IRIS MECHANISM FOR A SUPERCHARGING DEVICE OF AN INTERNAL COMBUSTION ENGINE, SUPERCHARGING DEVICE AND BLADE FOR THE IRIS MECHANISM
COMPRESSEUR RADIAL COMPRENANT UN MÉCANISME À DIAPHRAGME IRIS POUR UN DISPOSITIF DE CHARGE D'UN MOTEUR À COMBUSTION INTERNE, DISPOSITIF DE CHARGE ET LAMELLE POUR LE MÉCANISME À DIAPHRAGME IRIS

(30) Priorität: 14.09.2017 DE 102017216327
(43) Veröffentlichungstag der Anmeldung: 22.07.2020
(73) Patentinhaber: Vitesco Technologies GmbH, 93055 Regensburg (DE)
(72) Erfinder: BOGNER, Mathias, 94315 Straubing (DE); SCHÄFER, Christoph, 96450 Coburg (DE); SLAVIC, Sasa, 69126 Heidelberg (DE)
(74) Vertreter: Vitesco Technologies
(86) Internationale Anmeldenummer: PCT/EP2018/070145
(87) Internationale Veröffentlichungsnummer: WO 2019/052731

(56) Entgegenhaltungen:
- US-A1- 2014 308 110
- US-A1- 2016 177 956
- US-A1- 2017 211 707

## Beschreibung

Die Erfindung betrifft einen Radialverdichter mit einem Irisblendenmechanismus für eine Aufladevorrichtung eines Verbrennungsmotors. Die Erfindung betrifft des Weiteren eine Aufladevorrichtung mit einem solchen Verdichter, sowie eine Lamelle für den Irisblendenmechanismus des Radialverdichters.

Aufladevorrichtungen werden vermehrt zur Leistungssteigerung bei Brennkraftmaschinen, insbesondere bei Kraftfahrzeug-Verbrennungsmotoren eingesetzt. Dies geschieht immer häufiger mit dem Ziel, den Verbrennungsmotor bei gleicher oder gar gesteigerter Leistung in Baugröße und Gewicht zu reduzieren und gleichzeitig den Verbrauch und somit den CO₂-Ausstoß, im Hinblick auf immer strenger werdende gesetzliche Vorgaben diesbezüglich, zu verringern. Das Wirkprinzip besteht darin, den Druck im Ansaugtrakt des Verbrennungsmotors zu erhöhen und so eine bessere Befüllung eines Brennraumes des Verbrennungsmotors mit Luft-Sauerstoff zu bewirken. Somit kann mehr Treibstoff, wie Benzin oder Diesel, pro Verbrennungsvorgang umgesetzt werden, also die Leistung des Verbrennungsmotors erhöht werden.

Ein spezielles Beispiel einer solchen Aufladevorrichtung ist ein Abgasturbolader, der die im Abgasstrom enthaltene Energie nutzt, um den Druck im Ansaugtrakt zu erzeugen. Dazu weist der Abgasturbolader eine im Abgastrakt des Verbrennungsmotors angeordnete Abgasturbine, einen im Ansaugtrakt angeordneten Radialverdichter und ein dazwischen angeordnetes Läuferlager auf. Die Abgasturbine weist ein Turbinengehäuse und ein darin angeordnetes, durch den Abgasmassenstrom angetriebenes Turbinenlaufrad auf. Der Radialverdichter weist ein Verdichtergehäuse und ein darin angeordnetes, einen Ladedruck aufbauendes Verdichterlaufrad auf. Das Turbinenlaufrad und das Verdichterlaufrad sind auf den sich gegenüberliegenden Enden einer gemeinsamen Welle, der sogenannten Läuferwelle, drehfest angeordnet und bilden so den sogenannten Turboladerläufer. Die Läuferwelle erstreckt sich axial zwischen Turbinenlaufrad und Verdichterlaufrad durch das zwischen Abgasturbine und Radialverdichter angeordnete Läuferlager und ist in diesem, in Bezug auf die Läuferwellenachse, radial und axial drehgelagert. Gemäß diesem Aufbau treibt das vom Abgasmassenstrom angetriebene Turbinenlaufrad über die Läuferwelle das Verdichterlaufrad an, wodurch der Druck im Ansaugtrakt des Verbrennungsmotors, bezogen auf den Frischluftmassenstrom hinter dem Radialverdichter, erhöht und dadurch eine bessere Befüllung des Brennraumes mit Luft-Sauerstoff bewirkt wird.

Alternativ kann bei einer solchen Aufladevorrichtung zum Antrieb des Radialverdichters statt einer Abgasturbine auch zum Beispiel eine elektromotorische Antriebseinheit eingesetzt werden. Eine solche Aufladevorrichtung wird auch als sogenannter E-Booster oder E-Lader bezeichnet. Aber auch eine mechanische Kopplung mit dem Verbrennungsmotor, beispielsweise über ein Zwischengetriebe, kann zum Antrieb des Radialverdichters genutzt werden.

Der Radialverdichter ist in seinem Betriebsverhalten charakterisiert durch ein sogenanntes Verdichterkennfeld, das den Druckaufbau über den Massendurchsatz für verschiedene Verdichterdrehzahlen oder Umfangsgeschwindigkeiten beschreibt. Ein stabiles und nutzbares Kennfeld des Radialverdichters wird begrenzt durch die sogenannte Pumpgrenze hin zu niedrigen Durchsätzen, durch die sogenannte Stopfgrenze hin zu höheren Durchsätzen, und strukturmechanisch durch die maximale Drehzahlgrenze. Beim Anpassen eines Abgasturboladers an einen Verbrennungsmotor wird ein Radialverdichter mit für den Verbrennungsmotor möglichst günstigem Verdichterkennfeld ausgewählt. Hierbei sollten folgende Voraussetzungen erfüllt sein:
- Eine Motorvolllastlinie soll komplett innerhalb des nutzbaren Verdichterkennfelds liegen;
- vom Fahrzeughersteller geforderte Mindestabstände zu den Kennfeldgrenzen sollen eingehalten werden;
- maximale Verdichterwirkungsgrade sollen bei Nennlast und in einem Bereich eines unteren Eckdrehmomentes des Verbrennungsmotors vorliegen; und
- das Verdichterrad soll ein minimales Trägheitsmoment haben.

Die gleichzeitige Erfüllung aller genannten Voraussetzungen wäre mit einem herkömmlichen Radialverdichter ohne Zusatzmaßnahmen nur eingeschränkt möglich. Beispielsweise würden sich folgende Zielkonflikte durch gegenläufige Trends ergeben:
- Reduktion des Trägheitsmoments des Radialverdichters und Maximierung der Kennfeldbreite und des Spitzenwirkungsgrades,
- Reduktion des Spülens im Bereich des unteren Eckdrehmoments und Maximierung der spezifischen Nennleistung,
- Verbesserung des Ansprechverhaltens und Erhöhung der spezifischen Nennleistung des Verbrennungsmotors.

Die genannten Zielkonflikte könnten durch ein Verdichter-Design gelöst werden, das ein breites Kennfeld bei minimalem Trägheitsmoment sowie maximale Wirkungsgrade auf der Volllastlinie des Motors aufweist.

Neben den genannten stationären Anforderungen muss auch bei transienten Betriebszuständen, z.B. bei einem schnellen Lastabwurf des Verbrennungsmotors, ein stabiles Betriebsverhalten des Radialverdichters gewährleistet sein. Dies heißt, dass bei einem Radialverdichter auch bei einer plötzlichen Abnahme des geförderten Verdichtermassenstroms das schädliche sogenannte Verdichterpumpen vermieden werden muss.

Mit Einschränkung auf den Verdichtereinlass eines Radialverdichters ist die oben genannte Lösung bisher durch Zusatzmaßnahmen, wie einem verstellbaren Schaufel-Vorleitapparat, Maßnahmen zur Reduktion eines Einlassquerschnitts des Radialverdichters oder einem festen Rezirkulationskanal, auch bekannt als Ported Shroud bzw. kennfeldstabilisierende Maßnahme, erreicht worden. Bei den variablen Lösungen wird die Verbreiterung des nutzbaren Arbeitsbereiches des Radialverdichters durch aktives Verschieben des Kennfeldes erreicht. So wird bei Motorbetrieb mit niedrigen Drehzahlen und Durchsätzen das Verdichterkennfeld "nach links", hin zu niedrigen Massenströmen, verschoben, während im Motorbetrieb bei hohen Drehzahlen und Durchsätzen das Verdichterkennfeld nicht oder "nach rechts", hin zu höheren Masseströmen, verschoben wird.

Der Schaufel-Vorleitapparat verschiebt durch die Einstellung von Schaufelwinkeln und Induktion eines Vordralls in beziehungsweise gegen die Verdichterraddrehrichtung das gesamte Verdichterkennfeld hin zu kleineren beziehungsweise größeren Durchsätzen. Der erforderliche Verstellmechanismus und der Vorleitapparat selbst stellen jedoch eine filigrane, komplizierte und teure Lösung dar.

Die Maßnahmen mit Verengung des Verdichtereinlasses durch Querschnittsreduktion verschieben das Verdichterkennfeld hin zu kleineren Durchsätzen, indem der Einlassquerschnitt durch Schließen der Konstruktion unmittelbar vor dem Radialverdichter verkleinert wird. Im geöffneten Zustand geben die Maßnahmen möglichst den gesamten Einlassquerschnitt wieder frei und beeinflussen beziehungsweise verschieben so das Kennfeld nicht oder nur marginal. Mögliche, derartige Lösungen sind beispielsweise in der US 2016/265424 A1 oder der DE 10 2011 121 996 A1 beschrieben.

Bei dem festen Rezirkulationskanal handelt es sich um eine passive Lösung. Er verbreitert den nutzbaren Kennfeldbereich des Radialverdichters ohne dessen Kennfeld grundsätzlich zu verschieben. Er stellt im Verhältnis zum Vorleitapparat und der beschriebenen variablen Querschnittsreduktion eine deutlich günstigere, aber gleichzeitig weniger effiziente Lösung dar.

Zur Vermeidung des Verdichterpumpens bei einem schnellen Lastabwurf wird gewöhnlich ein sogenanntes Schubumluft-Ventil eingesetzt, das im Falle der plötzlichen Abnahme des Ladeluftmassenstroms durch den Verbrennungsmotor einen Bypass vom Verdichteraustritt zum Verdichtereintritt öffnet und so den Radialverdichter im stabilen Kennfeldbereich rechts von der Pumpgrenze hält. Eine Kombination aus aktiven Maßnahmen, wie dem variablen Vorleitapparat und dem Schubumluft-Ventil ist denkbar, aber unüblich.

Die US 2017/0211707 A1 betrifft eine Durchflusskontrollvorrichtung und ein Fahrzeug mit einer solchen Vorrichtung. Die US 2014/308110 A1 betrifft Turbolader von Brennkraftmaschinen. Die US 2016/177956 A1 betrifft einen Verdichter eines Turboladers.

Eine Aufgabe, die der Erfindung zugrunde liegt, ist es, ein Konzept für einen Radialverdichter für eine Aufladevorrichtung eines Verbrennungsmotors anzugeben, welches zu einem verlässlichen Betrieb der Aufladevorrichtung bei gleichzeitig erweitertem Kennfeldbereich beiträgt. Weiterhin soll eine Lamelle für einen Irisblendenmechanismus des Radialverdichters zur Verfügung gestellt werden, die das vorgenannte Konzept für den Radialverdichter ermöglicht. Eine weitere Aufgabe besteht darin eine Aufladevorrichtung für einen Verbrennungsmotor anzugeben, mit der die Vorteile des Erfindungsgemäßen Radialverdichters im Betrieb des Verbrennungsmotors realisiert werden können.

Es wird ein Radialverdichter für eine Aufladevorrichtung eines Verbrennungsmotors offenbart. Der Radialverdichter weist eine Lageranordnung auf, in der eine Läuferwelle drehbar gelagert ist. Der Turbolader weist weiterhin ein in einem Verdichtergehäuse angeordnetes Verdichterrad auf, welches drehfest auf der Läuferwelle angeordnet ist. Der Radialverdichter weist weiter einen Frischluftzuführkanal auf, der zum Leiten eines Frischluftmassenstroms auf das Verdichterrad ausgebildet ist. Stromaufwärts vor dem Verdichterrad ist ein Irisblendenmechanismus angeordnet, der ausgebildet ist, eine Blendenöffnung zumindest teilweise zu schließen oder zu öffnen, sodass ein Strömungsquerschnitt für den Frischluftmassenstrom, etwa ein Querschnitt des Frischluftzuführkanals, zum Anströmen des Verdichterrades zumindest über einen Teilbereich variabel einstellbar ist. Der Irisblendenmechanismus weist mehrere Lamellen auf, wobei jede Lamelle zumindest einen ersten und einen zweiten Lamellenabschnitt aufweist. Jede Lamelle weist ein Lagerelement für eine Drehlagerung an einem feststehenden Lagerteil auf. Das Lagerelement ist in einem Lagerabschnitt in einem Endbereich des ersten Lamellenabschnitts angeordnet. Jede Lamelle weist ein Betätigungselement auf, welches in einem dem Lagerabschnitt gegenüberliegenden, in einem Endbereich des zweiten Lamellenabschnitts liegenden Betätigungsbereich angeordnet ist. Zumindest zwischen dem ersten Lamellenabschnitt und dem zweiten Lamellenabschnitt der jeweiligen Lamelle ist ein Versatz in zu einer Haupterstreckungsebene der Lamelle senkrechten Richtung ausgebildet.

In einem Ausführungsbeispiel des Radialverdichters ist ein variabler Irisblendenmechanismus vorgesehen, der typischerweise im Frischluftzuführkanal direkt vor dem Verdichtereinlass zur Kennfeldverschiebung angeordnet ist. Der Irisblendenmechanismus kann auch als Irisblende oder Irisdrossel bezeichnet werden und hat die Aufgabe, den Einlassmassenstrom des Radialverdichters zumindest über einen Teilbereich hinweg einzustellen. Die Irisdrossel wirkt dabei wie eine Art Maskierung eines äußeren Bereichs des Verdichtereinlasses. Bei zunehmender Drosselung, das heißt Querschnittsverengung, übernimmt die Irisdrossel quasi die Aufgabe eines Schubumluft-Ventils, da sie ein Verdichterpumpen des Radialverdichters unterbinden kann. Dadurch ist es möglich, den Betriebsbereich des Radialverdichters aktiv zu beeinflussen und zusätzlich den Radialverdichter bei einem plötzlichen Lastabwurf des Motors in einem stabilen Betriebspunkt zu halten.

Der Frischluftzuführkanal ist an dem Radialverdichter ausgebildet. Beispielsweise ist der Frischluftzuführkanal zumindest teilweise durch das Verdichtergehäuse, den Irisblendenmechanismus, einen Ansaugstutzen und/oder andere Komponenten des Radialverdichters ausgebildet.

Der Irisblendenmechanismus weist in einem Ausführungsbeispiel mehrere, durch Drehung zueinander verschiebbare Lamellen auf, die einander teilweise überlappend über den Umfang des Frischluftzuführkanals, konzentrisch zur Mittelachse des Frischluftzuführkanals bzw. des Verdichtereinlasses, angeordnet sind. Jede Lamelle ist um einen jeweiligen, vorzugsweise in einem Randbereich der Lamelle angeordneten, Drehpunkt drehbar an einem feststehenden Lagerteil gelagert und steht mit einem Betätigungselement, das vorzugsweise in einem dem Drehpunkt gegenüberliegenden Randbereich der Lamelle angeordnet ist, mit einem bewegbar gelagerten Verstellring in Wirkverbindung.

Jede Lamelle hat einen im Wesentlichen plattenförmigen, flachen Lamellengrundkörper, der für die Abschirmung des Frischluftmassenstroms und somit der Einstellung der Blendenöffnung dient. Der Lamellengrundkörper erstreckt sich dabei beispielsweise in einer Haupterstreckungsebene nach Art eines Kreisringsegments über einen Teil eines Kreisbogens, bei über den Kreisbogen gleichbleibender oder sich verändernder Ringbreite. Erfindungsgemäß weist jede Lamelle bzw. der jeweilige Lamellengrundkörper zumindest einen ersten und einen zweiten Lamellenabschnitt auf, wobei zumindest zwischen dem ersten Lamellenabschnitt und dem zweiten Lamellenabschnitt der jeweiligen Lamelle ein Versatz in Axialrichtung des Frischluftzuführkanals und somit in zu der Haupterstreckungsebene der Lamelle senkrechter Richtung, ausgebildet ist.

Das Lagerteil ist beispielsweise ein im Bereich des Frischluftzuführkanals festgelegter Lagerring, ein separates Gehäuse des Irisblendenmechanismus, Teil des Verdichtergehäuses des Turboladers oder mehrteilig ausgebildet, etwa durch einen Teil des Verdichtergehäuses und ein separates zusätzliches Gehäuseteil. Das Lagerteil ist dabei ringförmig ausgebildet oder hat einen ringförmigen Abschnitt. Das Lagerteil kann auch ein feststehendes Gehäuseelement sein.

Der Verstellring ist bei diesem Ausführungsbeispiel konzentrisch zu dem Lagerteil angeordnet und um die gemeinsame Mittelachse, die gleichzeitig die Mittelachse des Frischluftzuführkanals bzw. des Verdichtereinlasses bildet, drehbar. Die Lamellen werden über den Verstellring synchronisiert und gemeinsam bewegt. Durch Drehung des Verstellrings um seine Mittelachse wird mittels des Betätigungselements auch die Drehung der Lamellen um ihren jeweiligen Drehpunkt ausgelöst. Bei einer Drehung der Lamellen parallel zur Drehachse des Verdichterrades schwenken die Lamellen radial nach innen und führen so zu einer gewünschten Verengung des Strömungsquerschnittes direkt vor dem Verdichterrad. Der Verstellring selbst wird beispielsweise über einen Aktuator angesteuert und bewegt. Der Aktuator kann ein elektrisch oder pneumatisch betriebener Steller sein.

Für die Drehlagerung am Lagerteil weist eine Lamelle etwa ein Lagerelement auf, das in einem Lagerabschnitt in einem Endbereich des ersten Lamellenabschnitts des Lamellengrundkörpers angeordnet ist. Zur Drehbetätigung der Lamelle weist der Lamellengrundkörper in einem dem Lagerabschnitt gegenüberliegenden, in einem Endbereich des zweiten Lamellenabschnitts liegenden Betätigungsbereich, ein Betätigungselement auf. Die beiden zueinander versetzten Lamellenabschnitte weisen vorzugsweise im Wesentlichen gleiche und über ihre Erstreckung gleichbleibende Wandstärken auf.

Sowohl das Lagerelement als auch das Betätigungselement sind beispielsweise als stift- oder zapfenförmige Körper ausgebildet, die sich typischerweise im Wesentlichen senkrecht zu einer Haupterstreckungsebene des Lamellengrundkörpers erstrecken.

Dadurch, dass ein erster und ein zweiter Lamellenabschnitt jeder Lamelle zueinander versetzt, insbesondere parallel versetzt, sind, wird mit Vorteil dazu beigetragen, dass die Lamellen des Irisblendenmechanismus in ihren Überlappungsbereichen ohne Widerstand aneinander vorbeigleiten können. Dadurch verspannen sich die Lamellen beim Schließen des Mechanismus, also bei einer Querschnittsverengung, nicht. Weiterhin wird dadurch ermöglicht, die Lamellen dicker und steifer, also insgesamt stabiler auszuführen, sodass eine erhöhte Festigkeit der Lamellen gewährleistet werden kann. Dies ist erforderlich, da durch das vorbeiströmende Medium nicht unerhebliche Kräfte auf die Lamellen aufgebracht werden. Hierin besteht der maßgebliche Unterschied zu den aus der Optik bekannten Irisblenden, deren Lamellen im Gegensatz dazu, ausschließlich eben mit konstanter, besonders geringer Wandstärke ausgebildet sein können, da hier keine senkrecht auf die Lamellen-Haupterstreckungsebene wirkende Kräfte auftreten. Mit anderen Worten ermöglicht die Ausbildung eines Versatzes, dass eine Dicke der Lamellen ein frei wählbarer Konstruktionsparameter wird. Weiterhin tragen die Lamellen zu einem robusten, langlebigen und kostengünstigen Design des Irisblendenmechanismus bei, was sich wiederum positiv auf eine Verlässlichkeit des Turboladers auswirkt. Hier und im Folgenden bedeutet Versatz, dass der erste Lamellenabschnitt und der zweite Lamellenabschnitt jeweils eine Haupterstreckungsebene aufweisen, die parallel versetzt zueinander angeordnet sind. Die Haupterstreckungsebene ist dabei als eine Mittelebene des jeweiligen Lamellenabschnitts zu verstehen, die in gleichem Abstand zu einer vorderseitigen und einer rückseitigen Oberfläche des jeweiligen Lamellenabschnitts verläuft. Mit anderen Worten weisen sowohl eine Vorderseite als auch eine Rückseite einer Lamelle einen Versatz in gleicher Richtung auf. Anders ausgedrückt, definiert eine Vorderseite des ersten Lamellenabschnitts eine erste Referenzebene und eine Rückseite des ersten Lamellenabschnitts eine zweite Referenzebene, wobei die Vorderseite des zweiten Lamellenabschnitts parallel versetzt ist zu der ersten Referenzebene und die Rückseite des zweiten Lamellenabschnitts parallel in gleicher Richtung versetzt ist zu der zweiten Referenzebene. Durch das beschriebene Konzept wird auch dazu beigetragen, die zuvor genannten Zielkonflikte zu lösen.

Gemäß einer Ausführungsform ist der Versatz der Lamellenabschnitte zueinander, in zu einer Haupterstreckungsebene der Lamelle senkrechten Richtung, durch eine oder mehrere Kröpfungen gebildet oder durch einen oder mehrere Stufenabsätze gebildet.

Bei einer Kröpfung handelt es sich um eine Umformung, insbesondere eine Umbiegung, der Lamelle derart, dass nichtgebogene Teile, in dem Fall die beiden Lamellenabschnitte nach dem Umformvorgang, parallel versetzt verlaufen und zwischen den beiden Lamellenabschnitten ein schräg vom einen Lamellenabschnitt zum anderen Lamellenabschnitt verlaufender Übergangsbereich ausgebildet ist. Die gekröpfte Form ermöglicht, die Lamellen besonders dick und steif auszuführen, wie eingangs erwähnt. Bei einer Kröpfung bleibt die Wandstärke einer Lamelle im Wesentlichen, auch im Übergangsbereich, konstant. Weiterhin wird dazu beitragen, dass die Lamellen als einfache Umformteile ausgebildet werden können, wodurch Herstellungskosten geringgehalten werden können. Eine jeweilige Lamelle kann dabei mehrere Kröpfungen aufweisen, wodurch mehrere Lamellenabschnitte mit jeweils einem Übergangsbereich dazwischen ausgebildet sind, was insgesamt einen stufenförmigen Verlauf der Lamellenfläche mit mehreren Stufen ergibt.

Das Vorsehen von einem oder mehreren Stufenabsätzen trägt in ähnlicher Weise zu besonders steifen und robusten Lamellen bei, wobei Vorder- und Rückseite der Lamelle gleichermaßen eine senkrecht zur Haupterstreckungsebene verlaufende Stufe aufweisen. Dabei sind die Stufenabsätze auf Vorder- und Rückseite der Lamelle vorzugsweise so versetzt zueinander angeordnet, dass im Übergangsbereich zwischen den beiden Lamellenabschnitten ein Bereich mit vergrößerter Wandstärke ergibt. Beispielsweise ist eine solche Lamelle mit Stufenabsätzen als Spritzgussteil hergestellt. Dadurch wird zu einer besonders kostengünstigen Herstellung beigetragen, wobei komplexe Geometrien herstellbar sind, ohne dass Umformmaßnahmen notwendig sind.

Das Vorsehen von mehreren Kröpfungen beziehungsweise mehreren Stufenabsätzen ermöglicht, dass größere Überlappungsbereiche der Lamellen vorgesehen werden können, wobei sich jeweils mehr als zwei Lamellen gegenseitig überlappen und somit mehr als zwei Lamellen in axialer Richtung (in Bezug auf die Mittelachse der Blendenöffnung bzw. des Verdichtereinlasses) gleichzeitig übereinander gleiten können. Dies wirkt sich positiv auf eine minimale Öffnungsweite bzw. den Öffnungsdurchmesser der Blende aus. Beispielsweise kann eine von einem gewünschten minimalen Öffnungsquerschnitt unabhängige Lamellenanzahl vorgesehen werden.

Gemäß einer Ausführungsform mit Stufenabsätzen, sind der erste und der zweite Lamellenabschnitt über zumindest einen Mittelteil einer Lamelle verbunden, wobei der zumindest eine Mittelteil eine größere Wandstärke als der erste oder der zweite Lamellenabschnitt aufweist. Beispielsweise weist der zumindest eine Mittelteil eine doppelte Wandstärke im Vergleich zu dem ersten oder zweiten Lamellenabschnitt auf. Der erste und zweite Lamellenabschnitt haben beispielsweise die gleiche Wandstärke und sind über ein oder mehrere Stufenabsätze parallel versetzt zueinander. Eine derartige Ausgestaltungsform zeichnet sich durch eine besonders hohe Steifigkeit aus.

Gemäß einer Ausführungsform sind die Lamellen derart angeordnet, dass zwischen den Lamellen beim Schließen und Öffnen der Blendenöffnung ein im Wesentlichen konstantes Spiel ausgebildet ist. Durch den Versatz einer Lamelle zwischen den Lamellenabschnitten ist es möglich, dass die Lamellen während des Schließens und Öffnens der Blendenöffnung ein konstantes Spiel untereinander aufweisen und beibehalten können. Dadurch können notwendige Verstellkräfte, insbesondere bei starker Verschmutzung in Zwischenräumen der Lamellen, minimiert oder kleingehalten werden. Ein Verkleben der Lamellen durch deren Verspannung während des Schließens oder des Öffnens kann so vermieden werden. Durch die freie Wahl eines Lamellenspiels sind darüber hinaus auch keine hohen Toleranzanforderungen an Ebenheit und Form der Lamellen notwendig. Dies trägt zu dem robusten, langlebigen und kostengünstigen Design des Irisblendenmechanismus bei.

Gemäß einer Ausführungsform ist durch den Versatz jeder Lamelle ein Endanschlag zum Definieren einer minimalen Öffnungsweite einer Blendenöffnung des Irisblendenmechanismus gebildet. Mit anderen Worten läuft jede Lamelle beim Schließen des Irisblendenmechanismus bei minimaler Öffnungsweite auf die Versatzstufe der mit ihr überlappenden Lamelle auf. Somit ist durch den Versatz, ein Endanschlag und damit eine minimale Öffnungsstellung des Irisblendenmechanismus in das Bauteil selbst integriert. Die minimale Öffnungsweite kann durch eine Anzahl der Lamellen und/oder eine Position einer Versatzstufe, die durch eine Kröpfung bzw. einen Stufenabsatz gebildet wird, vorbestimmt werden. Die Versatzstufe ist dabei beispielsweise an der Ober- und/oder Unterseite einer Lamelle ausgebildet. Beispielsweise können drei oder vier Lamellen im Blendenmechanismus vorgesehen sein. Dies gilt auch für Lamellen mit mehreren Stufenabsätzen beziehungsweise mehreren Kröpfungen, wobei durch die Anzahl und/oder gezielte Positionierung der Versatzstufen die minimale Öffnungsweite begrenzt ist.

Des Weiteren wird eine Lamelle für einen Irisblendenmechanismus eines Radialverdichters offenbart, wobei die Lamelle zumindest einen ersten und einen zweiten Lamellenabschnitt aufweist. Die Lamelle weist zumindest einen ersten und einen zweiten Lamellenabschnitt auf. Die Lamelle weist für eine Drehlagerung an einem feststehenden Lagerteil ein Lagerelement auf, welches in einem Lagerabschnitt in einem Endbereich des ersten Lamellenabschnitts angeordnet ist. Die Lamelle weist ein Betätigungselement auf, welches in einem dem Lagerabschnitt gegenüberliegenden, in einem Endbereich des zweiten Lamellenabschnitts liegenden Betätigungsbereich angeordnet ist. Zumindest zwischen dem ersten Lamellenabschnitt und einem zweiten Lamellenabschnitt der Lamelle ist ein Versatz, in zu einer Haupterstreckungsebene der Lamelle senkrechten Richtung, ausgebildet. Die Lamelle ermöglicht im Wesentlichen die oben genannten Vorteile und Funktionen. Es gilt das in Bezug auf den Radialverdichter oben Gesagte gleichermaßen, wobei die Lamelle entsprechend der obigen Ausführungsformen weitergebildet sein kann.

Die erfindungsgemäße Aufladevorrichtung für eine Brennkraftmaschine zeichnet sich dadurch aus, dass die Aufladevorrichtung einen erfindungsgemäßen Radialverdichter nach einer der vorausgehend beschriebenen Ausführungen aufweist, wobei die Aufladevorrichtung als Abgasturbolader oder als ein elektromotorisch betriebener Lader oder auch als ein über eine mechanische Kopplung mit dem Verbrennungsmotor betriebener Lader ausgebildet ist. Die Aufladevorrichtung ist also beispielsweise als ein Abgasturbolader ausgebildet, der zum Antrieb des Verdichterlaufrades des Verdichters eine Abgasturbine aufweist oder ist alternativ als ein elektromotorisch betriebener Lader (auch E-Booster genannt) ausgebildet, der zum Antrieb des Verdichterlaufrades des Verdichters einen elektromotorischen Antrieb aufweist. Weiterhin kann die Aufladevorrichtung alternativ zu den zuvor genannten Ausführungen auch als ein über eine mechanische Kopplung mit der Brennkraftmaschine betriebener Lader ausgebildet sein. Eine solche Kopplung zwischen der Brennkraftmaschine und dem Radialverdichter kann beispielsweise mittels eines Zwischengetriebes erfolgen, das einerseits mit einer rotierenden Welle der Brennkraftmaschine und andererseits mit der Läuferwelle des Radialverdichters in Wirkverbindung steht.

Weitere Vorteile und Funktionen sind in der nachfolgenden, ausführlichen Beschreibung von Ausführungsbeispielen offenbart. Die Ausführungsbeispiele werden unter Zuhilfenahme der angehängten Figuren nachfolgend beschrieben. Gleichartige oder gleichwirkende Elemente sind figurenübergreifend mit den gleichen Bezugszeichen gekennzeichnet.

In den Figuren zeigen:
- Figur 1: eine schematisch vereinfachte Schnittansicht einer Ausführung einer erfindungsgemäßen Aufladevorrichtung mit einem Radialverdichter mit Irisblendenmechanismus,
- Figuren 2A bis 2C: schematische Aufsichten auf einen Irisblendenmechanismus aus Richtung der Verdichterachse in drei verschiedenen Betriebszuständen gemäß einem Ausführungsbeispiel,
- Figur 3: eine Lamelle des Irisblendenmechanismus gemäß dem Ausführungsbeispiel der Figuren 2A bis 2C,
- Figur 4: eine abgerollte Darstellung eines Ausführungsbeispiels des Irisblendenmechanismus eines erfindungsbemäßen Radialverdichters gesehen aus einer senkrecht zur Läufer- bzw. Verdichterachse stehenden Richtung, mit Lamellen gemäß einem weiteren Ausführungsbeispiel, und
- Figur 5: einen Ausschnitt einer weiteren abgerollten Darstellung eines Ausführungsbeispiels des Irisblendenmechanismus eines erfindungsbemäßen Radialverdichters gesehen aus einer senkrecht zur Läufer- bzw. Verdichterachse stehenden Richtung, mit Lamellen gemäß einem weiteren Ausführungsbeispiel.

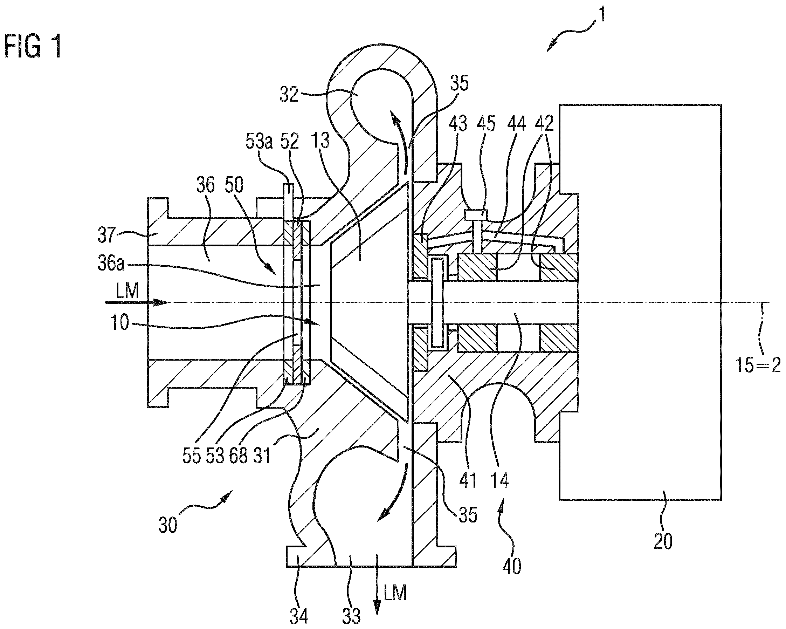

Figur 1 zeigt schematisiert eine Ausführung einer erfindungsgemäßen Aufladevorrichtung 1 in Schnittdarstellung. Die Aufladevorrichtung 1 weist eine Ausführung eines erfindungsgemäßen Radialverdichters 30, eine Lageranordnung 40 und eine Antriebseinheit 20 auf. Der Radialverdichter 30 weist ein in einem Verdichtergehäuse 31 angeordnetes Verdichterlaufrad 13 auf, welches drehfest auf einer drehbar in einer Lageranordnung 40 gelagerten Läuferwelle 14 angeordnet ist und so den sogenannten Laderläufer 10 bildet. Der Laderläufer 10 rotiert im Betrieb um eine Läuferdrehachse 15 der Läuferwelle 14. Die Läuferdrehachse 15 bildet gleichzeitig die Laderachse 2 bzw. die Verdichterachse (die zusammen auch einfach als Längsachse der Aufladevorrichtung bezeichnet werden können), ist durch die eingezeichnete Mittellinie dargestellt und kennzeichnet die axiale Ausrichtung der Aufladevorrichtung 1. Der Laderläufer 10 ist in diesem Beispiel mit seiner Läuferwelle 14 mittels zweier Radiallager 42 und einer Axiallagerscheibe 43 in einem Lagergehäuse 41, die zusammen eine Lageranordnung 40 bilden, gelagert. Sowohl die Radiallager 42 als auch die Axiallagerscheibe 43 werden hier über Ölversorgungskanäle 44 eines Ölanschlusses 45 mit Schmiermittel versorgt.

Gemäß dem gezeigten Ausführungsbeispiel weist eine Aufladevorrichtung 1, wie in Figur 1 dargestellt, einen mehrteiligen Aufbau auf. Dabei sind ein Gehäuse der Antriebseinheit 20, ein im Ansaugtrakt des Verbrennungsmotors anordenbares Verdichtergehäuse 31 und eine zwischen dem Gehäuse der Antriebseinheit 20 und Verdichtergehäuse 31 vorgesehene Lageranordnung 40 bezüglich der gemeinsamen Laderachse 2 nebeneinander angeordnet und montagetechnisch miteinander verbunden. Dabei sind durchaus auch alternative Anordnungen und Konfigurationen von Antriebseinheit und Lageranordnung möglich. Eine weitere Baueinheit der Aufladevorrichtung 1 stellt der Laderläufer 10 dar, der zumindest die Läuferwelle 14 und das in dem Verdichtergehäuse 31 angeordnete Verdichterlaufrad 13 aufweist.

Weiterhin weist der Radialverdichter 30 einen an das Verdichtergehäuse 31 anschließenden, den Verdichtereinlass 36a ausbildenden Luftzuführkanal 36 zum Leiten eines Luftmassenstroms LM auf das Verdichterlaufrad 13 auf, der einen Saugrohr-Anschlussstutzen 37 zum Anschluss an das Luft-Saugsystem (nicht dargestellt) des Verbrennungsmotors aufweist und in Richtung der Laderachse 2 auf das axiale Ende des Verdichterlaufrades 13 zu verläuft. Über diesen Luftzuführkanal 36 wird der Luftmassenstrom LM vom Verdichterlaufrad 13 aus dem Luft-Saugsystem angesaugt und auf das Verdichterrad 13 geleitet. Der Luftzuführkanal 36 kann auch ein Teil eines Ansaugstutzens sein und somit nicht Teil des Verdichtergehäuses 31 sondern schließt beispielsweise an den am Verdichtergehäuse 31 ausgebildeten Verdichtereinlass 36a an. Der Irisblendenmechanismus 50 ist dabei im Luftzuführkanal 36 festgelegt und/oder bildet einen Teilbereich des Luftzuführkanals 36 unmittelbar vor dem Verdichtereinlass 36a des Verdichtergehäuses 31.

Weiterhin weist das Verdichtergehäuse 31 in der Regel einen, ringförmig um die Laderachse 2 und das Verdichterlaufrad 13 angeordneten, sich schneckenförmig vom Verdichterlaufrad 13 weg erweiternden Ringkanal, einen sogenannten Spiralkanal 32, auf. Dieser Spiralkanal 32 weist eine zumindest über einen Teil des Innenumfanges verlaufende Spaltöffnung mit definierter Spaltbreite, den sogenannten Diffusor 35, auf, der in radialer Richtung vom Außenumfang des Verdichterlaufrades 13 weg gerichtet in den Spiralkanal 32 hinein verläuft und durch den der Luftmassenstrom LM vom Verdichterlaufrad 13 weg unter erhöhtem Druck in den Spiralkanal 32 strömt. Der Spiralkanal 32 dient dabei also zur Aufnahme und Abfuhr des vom Verdichterlaufrad 13 abströmenden und durch den Diffusor 35 austretenden verdichteten Luftmassenstroms LM. Der Spiralkanal 32 weist weiterhin einen tangential nach außen gerichteten Luftabführkanal 33 mit einem Verteiler-Anschlussstutzen 34 zum Anschluss an ein Luft-Verteilerrohr (nicht dargestellt) eines Verbrennungsmotors auf. Durch den Luftabführkanal 33 wird der Luftmassenstrom LM unter erhöhtem Druck in das Luft-Verteilerrohr des Verbrennungsmotors geleitet.

Die Antriebseinheit 20 ist in Figur 1 nicht weiter detailliert und kann sowohl als Abgasturbine als auch als elektromotorische Antriebseinheit oder auch als eine mechanische Kopplung mit der Brennkraftmaschine, z. B. als Zwischengetriebe, das das mit einer rotierenden Welle der Brennkraftmaschine in Wirkverbindung steht, ausgeführt sein, was die Aufladevorrichtung 1 im einen Fall zu einem Abgasturbolader und im anderen Fall zu einem elektromotorisch betriebenen Lader auch als E-Booster oder E-Kompressor bezeichnet oder zu einem mechanischen Lader, macht. Im Falle eines Abgasturboladers wäre gegenüber des Verdichterrades 13 beispielsweise ein Turbinenlaufrad vorgesehen, welches ebenfalls auf der Läuferwelle 14 drehfest angeordnet wäre und von einem Abgasmassenstrom angetrieben würde.

Im Luftmassenstrom LM stromaufwärts vor dem Verdichterlaufrad 13 ist der Irisblendenmechanismus 50 zusätzlich oder alternativ zu einem Schubumluft-Ventil im Luftzuführkanal 36 unmittelbar vor einem Verdichtereinlass 36a (auch Verdichtereintritt) angeordnet und/oder bildet zumindest einen Teilbereich des Luftzuführkanals 36 unmittelbar vor dem Verdichtereinlass 36a des Verdichtergehäuses 31.

Der Irisblendenmechanismus 50 ist dazu ausgebildet, eine Blendenöffnung zumindest teilweise zu schließen oder zu öffnen, so dass ein Strömungsquerschnitt für den Luftmassenstrom LM zum Anströmen des Verdichterlaufrades 13 zumindest über einen Teilbereich des Strömungsquerschnittes variabel einstellbar ist. Der Irisblendenmechanismus 50 ermöglicht so eine Kennfeldverschiebung für den Radialverdichter 30, in dem dieser als variable Einlassdrossel für das Verdichterrad 13 wirkt.

Der Irisblendenmechanismus 50 weist beispielsweise einen im Luftzuführkanal 36 konzentrisch zum Verdichtereinlass 36a festgelegten Lagerring 68, einen konzentrisch dazu angeordneten um ein gemeinsames Zentrum drehbaren Verstellring 53 mit einem Stellhebel 53a und mehrere um einen jeweiligen Drehpunkt im Lagerring 68 drehbar gelagerte Lamellen 52 auf. Die Lamellen 52 weisen jeweils einen plattenförmigen Lamellengrundkörper und ein stiftförmiges Betätigungselement 58 (hier nicht erkennbar), welches zur Betätigung der jeweiligen Lamelle 52 ausgebildet ist, und ein Lagerelement 59, zur Drehlagerung der jeweiligen Lamelle 52 an dem genannten Lagerring 68 als integrale Bestandteile der jeweiligen Lamelle 52 auf.

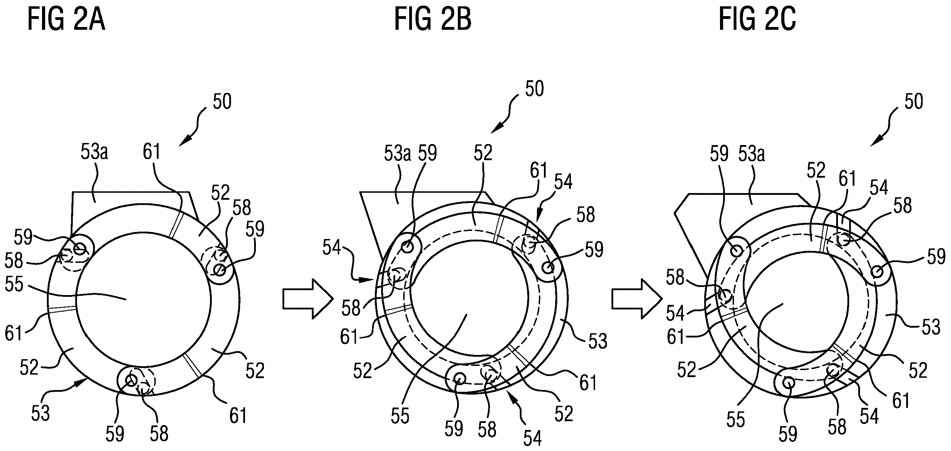

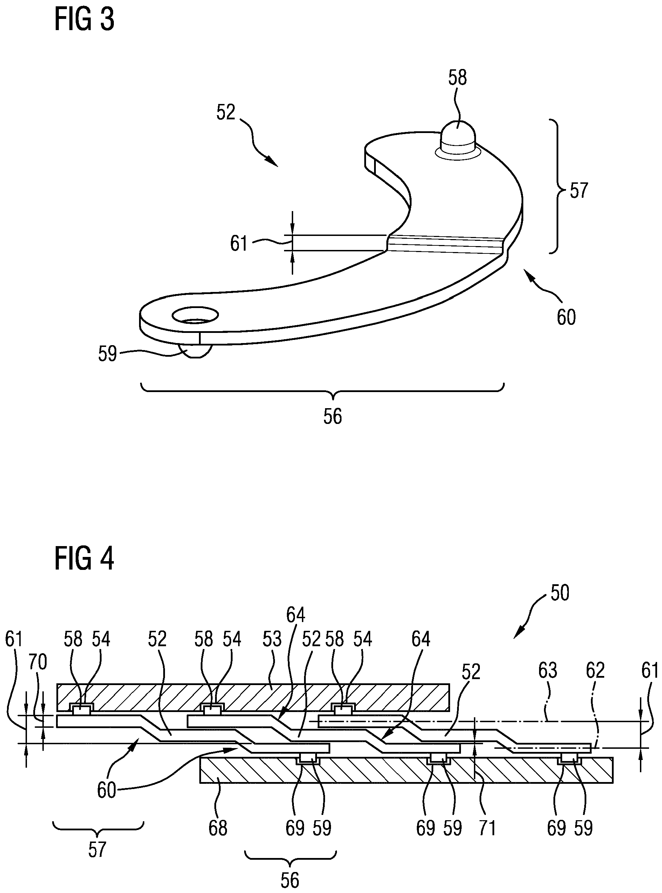

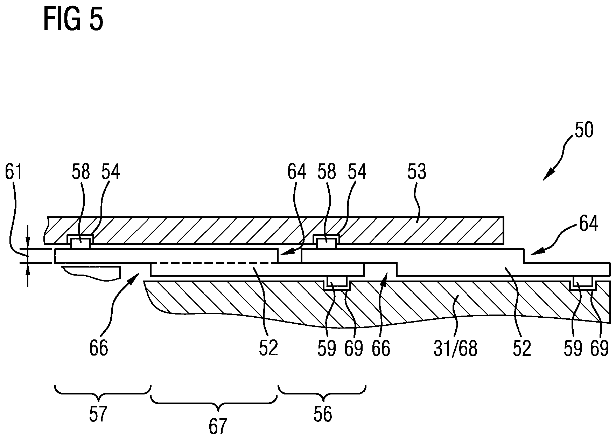

Die Figuren 2A bis 2C zeigen schematisch eine Ausführung eines Irisblendenmechanismus 50 für einen erfindungsgemäßen Radialverdichter 30 in drei verschiedenen Betriebszuständen. Der Irisblendenmechanismus 50 weist einen stationären, feststehenden (ortsfesten) Lagerring 68 auf (hier nicht dargestellt). Der Lagerring 68 kann, wie in den Figuren 4 dargestellt, durch ein separates Bauteil dargestellt werden, das im umgebenden Gehäuse, zum Beispiel des Luftzuführkanals 36 festgelegt ist. Alternativ kann der Lagerring auch direkt im umgebenden Gehäuse und einstückig mit diesem ausgebildet sein. So kann der Lagerring 68 auch direkt am Verdichtereinlass 36a des Verdichtergehäuses 31 ausgebildet sein, wie in Figur 5 angedeutet. Alternativ kann auch ein separates Gehäuse für den Irisblendenmechanismus 50 vorgesehen werden, so dass der Irisblendenmechanismus 50 als separate, vormontierbare Funktionseinheit am Verdichtergehäuse 31 oder im Luftzuführkanal 36 angebracht werden kann.

Auf dem Lagerring 68 sind in diesem Beispiel drei Lamellen 52 um ein jeweiliges Lagerelement 59 drehbar gelagert. Dazu weist der Lagerring 68 für jede Lamelle 52 eine zugeordnete Drehlagerstelle 69 auf (siehe Figuren 4 und 5) an der die jeweilige Lamelle 52 mit ihrem Lagerelement 59 drehgelagert ist.

Jede Lamelle 52 weist ein Betätigungselement (in den Figuren 2A, 2B und 2C nicht erkennbar) zur Betätigung durch einen Verstellring 53 auf, wobei das Lagerelement 59 in einem dem Betätigungselement 58 gegenüberliegenden Endbereich der jeweiligen Lamelle 52 angeordnet ist.

Als Lagerelement 59 kann beispielsweise ein stift- oder zapfenförmige Element auf der jeweiligen Lamelle 52 vorgesehen sein, mit dem die jeweilige Lamelle 52 in einer in dem Lagerring 68 vorgesehenen, die Lagerstelle 69 bildenden Bohrung oder Vertiefung, wie in den Figuren 4 und 5 erkennbar ist, gelagert ist.

Der Irisblendenmechanismus 50 weist weiterhin einen konzentrisch zum Lagerring 68 angeordneten, um das gemeinsame Zentrum drehbar gelagerten Verstellring 53 auf, der in Figur 2A weitgehend durch die Lamellen 52 verdeckt und nur an seinem Stellhebel 53a erkennbar ist. Im Beispiel der Figuren 2A bis 2C und 4 weist der Verstellring 53 drei Nuten 54 (in den Figuren 2A bis 2C nur angedeutet) zur geführten Betätigung der Lamellen 52 auf. Dabei ist für jede Lamelle 52 je eine schräg in Bezug zur radialen Richtung des Verstellrings 53 verlaufende Nut 54 vorgesehen, in die das Betätigungselement 58 der jeweiligen Lamelle 52 eingreift und darin geführt wird. So werden durch Drehung des Verstellrings 53 die Lamellen 52 synchronisiert bewegt. Der Verstellring 53 ist beispielsweise an seinem Außenumfang am oder im Gehäuse des Irisblendenmechanismus 50 bzw. in einem im Verdichtergehäuse 31 oder dem Luftzuführkanal 36 dafür ausgebildeten Gehäuseteil gelagert.

Durch Betätigung des Verstellrings 53, also durch Drehung um das mit dem Lagerring 68 gemeinsame Zentrum, werden die Betätigungselemente 58 der Lamellen 52 durch die schräg verlaufenden Nuten 54 radial nach innen geführt und so die Lamellen 52 um die jeweilige Lagerstelle 69 ebenfalls nach radial innen geschwenkt und verengen so eine Blendenöffnung 55 des Irisblendenmechanismus 50. Figur 2A zeigt dabei die Blendenöffnung 55 mit einer maximalen Öffnungsweite, Figur 2B zeigt die Blendenöffnung 55 mit einer verringerten Öffnungsweite und Figur 2C zeigt die Blendenöffnung 55 mit einer minimalen Öffnungsweite. Diese Darstellungen zeigen somit den durch teilweises Schließen oder Öffnen des Irisblendenmechanismus 50 variabel verstellbaren Teilbereich des Strömungsquerschnittes für dieses Ausführungsbeispiel auf. Der Irisblendenmechanismus 50 wirkt also als variable Einlassdrossel und ermöglicht so, wie eingangs erwähnt, eine vorteilhafte Kennfeldverschiebung für den Radialverdichter 30.

Im Folgenden wird der Fokus auf unterschiedliche Ausführungsbeispiele von erfindungsgemäßen Lamellen 52 gerichtet, die in dem beschrieben Irisblendenmechanismus 50 zum Einsatz kommen können.

Figur 3 zeigt eine Lamelle 52 für den Irisblendenmechanismus 50 gemäß einem Ausführungsbeispiel der Erfindung. Bei der Lamelle 52 der Figur 3 handelt es sich um eine einfach gekröpfte Blechlamelle, die als einfaches Umformteil ausgeführt ist. Die Lamelle 52 hat einen ersten Lamellenabschnitt 56 und einen zweiten Lamellenabschnitt 57. Die beiden Lamellenabschnitte 56 und 57 bilden im Ausführungsbeispiel sich gegenüberliegende Teilbereiche der gebogenen Lamelle 52. Der erste Lamellenabschnitt 56 weist ein Lagerelement 59 auf einer, in der Figur 3 unten liegenden Seite der Lamelle 52 auf, während der zweite Lamellenabschnitt 57 ein Betätigungselement 58 auf einer, in der Figur 3 oben liegenden Seite der Lamelle 52 aufweist. Mittels des Lagerelements 59 ist die Lamelle 52 an dem feststehenden Lagerring bzw. am umgebenden Gehäuseteil drehbar gelagert, während die Lamelle 52 mittels des Betätigungselements 58 in eine Führungsnut an dem Verstellring 53 eingreift.

Die in Figur 3 dargestellte Lamelle 52 weist zwischen dem ersten Lamellenabschnitt 56 und dem zweiten Lamellenabschnitt 57 eine Kröpfung 60 auf, sodass zwischen dem ersten Lamellenabschnitt 56 und dem zweiten Lamellenabschnitt 57, die jeweils gleiche Wandstärken haben, ein Versatz 61 ausgebildet ist. Dieser Versatz 61 ermöglicht die eingangs genannten Vorteile, wobei sich dadurch mehrere der gezeigten Lamelle 52 in montiertem Zustand des Irisblendenmechanismus 50 gegenseitig überdecken, jedoch aneinander vorbeigleiten können, ohne sich gegeneinander zu verspannen.

Figur 4 zeigt einen Irisblendenmechanismus 50 gemäß einem weiteren Ausführungsbeispiel in abgerollter Darstellung, aus zur Läuferdrehachse senkrechter Sicht, was die gegenseitige Überdeckung der einzelnen Lamellen 52 verdeutlicht. Der Irisblendenmechanismus 50 weist im Wesentlichen einen feststehenden Lagerring68, einen Verstellring 53 und drei Lamellen 52 auf. Die Lamellen 52 entsprechen grundsätzlich der oben beschrieben Blechlamelle, weisen jedoch im Gegensatz zu der Ausführungsform der Figur 3, jeweils zwei Kröpfungen 60 auf, sodass ein Versatz 61 zwischen dem ersten Lamellenabschnitt 56 und dem zweiten Lamellenabschnitt 57 einer Lamelle 52 über zwei Stufen gebildet ist (exemplarisch an der linken Lamelle 52 der Figur 4 dargestellt) . Der Versatz 61 ist beispielsweise auf die jeweiligen Oberseiten oder Unterseiten (gemäß Darstellung in Figur 4) des ersten und zweiten Lamellenabschnitts 56, 57 bezogen. Mit anderen Worten bzw. mit Bezug auf die Profilmitte des jeweiligen Lamellenabschnitts 56, 57 hat ein jeweiliger Lamellenabschnitt 56, 57 je eine mittlere Haupterstreckungsebene 62, 63, wobei die beiden Haupterstreckungsebenen entsprechend des Versatzes 61 parallel zueinander verlaufen (exemplarisch an der rechten Lamelle 52 der Figur 4 gezeigt). Im Ausführungsbeispiel gemäß Figur 4 hat jede Lamelle 52, insb. die beiden Lamellenabschnitte 56, 57, wie auch der zwischen den Kröpfungen 60 liegende (dritte) Lamellenabschnitt, wiederum eine im Wesentlichen gleichbleibende Wandstärke 70 (einmal in Figur 4 dargestellt).

Deutlich zu erkennen ist in dieser Darstellung, jeweils ein auf ihrer hier unten liegenden Seite und in einem ersten Lamellenabschnitt 56 einer jeweiligen Lamelle 52 angeordnetes Lagerelement 59, das in einer jeweiligen Lagerstelle 69 des Lagerringes 68 drehgelagert ist. Weiterhin weist jede Lamelle 52 auf ihrer hier oben liegenden Seite und in einem zweiten Lamellenabschnitt 57 angeordnetes Betätigungselement 58 auf, das in eine jeweilige Nut 54 des Verstellrings 53 eingreift.

Durch die Mehrfachkröpfung wird eine Überdeckung zwischen drei Lamellen und somit ein größerer Überdeckungsbereich ermöglicht und es können mehrere Lamellen 52 gleichzeitig übereinander gleiten, wie in Figur 4 gezeigt. Dadurch können die eingangs genannten Vorteile und Funktionen, insbesondere jedoch ein größerer variabel verstellbarer Teilbereich des Strömungsquerschnittes erreicht werden.

Wie exemplarisch an der mittleren Lamelle 52 der Figur 4 gezeigt, definieren sämtliche oder einzelne Kröpfungen 60 einer Lamelle 52 gleichzeitig einen jeweiligen Endanschlag 64, der den Schwenkbereich für eine darüber und/oder darunter angeordnete, weitere Lamelle 52 begrenzt. Die Endanschläge 64, also die jeweiligen Kröpfungen 60, begrenzen somit eine minimale Öffnungsweite der Blendenöffnung 55 des Irisblendenmechanismus 50.

Weiterhin ist durch die Ausbildung eines Versatzes 61 ein konstantes Spiel 68 zwischen den einzelnen Lamellen 52 ausbildbar, wie in Figur 4 exemplarisch dargestellt. Das konstante Spiel 71 ist in sämtlichen Bereichen zwischen zwei übereinander angeordneten Lamellen 52 ausgebildet. Dies ist unabhängig von der Anzahl der Kröpfungen.

Figur 5 zeigt, in gleicher Darstellung wie Figur 4, einen Ausschnitt eines Irisblendenmechanismus 50 mit Lamellen 52 gemäß einem weiteren Ausführungsbeispiel. Wiederum sind der Lagerring 68, der hier beispielsweise unmittelbar am feststehenden Verdichtergehäuse 31 ausgebildet ist, sowie der Verstellring 53 dargestellt. Weiterhin sind hier lediglich nur zwei Lamellen 52, von einer Mehrzahl der hier vorgesehenen Lamellen 52, dargestellt, die prinzipiell analog zu oben aufgebaut sind und wiederum einen Versatz 61 aufweisen, der jedoch nicht durch Kröpfungen hergestellt ist, sondern durch einen Stufenabsatz 66. Dem entsprechend ist auch bei dieser Darstellung deutlich zu erkennen, dass jeweils ein auf ihrer hier unten liegenden Seite und in einem ersten Lamellenabschnitt 56 einer jeweiligen Lamelle 52 angeordnetes Lagerelement 59, in einer jeweiligen Lagerstelle 69 des Lagerringes 68 drehgelagert ist. Weiterhin weist auch jede Lamelle 52 auf ihrer hier oben liegenden Seite und in einem zweiten Lamellenabschnitt 57 angeordnetes Betätigungselement 58 auf, das in eine jeweilige Nut 54 des Verstellrings 53 eingreift.

Im gezeigten Beispiel ist ein einzelner, auch einfacher, Stufenabsatz gebildet, wobei sowohl die Oberseite als auch die Unterseite einer jeweiligen Lamelle 52 eine im Wesentlichen rechtwinklige Stufe aufweist. Die beiden Lamellenabschnitte 56 und 57 sind hier über einen Mittelteil 67 verbunden, welcher eine doppelte Wandstärke im Vergleich zu dem ersten und/oder zweiten Lamellenabschnitt 56 beziehungsweise 57 hat. Dies ermöglicht die besonders steife Ausführung, wie eingangs erwähnt.

Analog zu dem Ausführungsbeispiel der Figur 4 können auch mehrere versetzt zueinander angeordnete Stufenabsätze 66 vorgesehen sein. Optional bildet ein jeweiliger Stufenabsatz 66 wiederum einen Endanschlag 64 mit Versatzlinie 65 wie oben beschrieben. Auch gilt das oben Gesagte hinsichtlich des konstanten Spiels analog.

## Patentansprüche

1. Radialverdichter (30) für eine Aufladevorrichtung eines Verbrennungsmotors, aufweisend
- eine Lageranordnung (40), in der eine Läuferwelle (14) drehbar gelagert ist;
- ein in einen Verdichtergehäuse (31) angeordnetes Verdichterrad (13), welches drehfest auf der Läuferwelle (14) angeordnet ist; und
- einen Frischluftzuführkanal (36) zum Leiten eines Frischluftmassenstroms (FM) auf das Verdichterrad (13), wobei
- stromaufwärts vor dem Verdichterrad (13) ein Irisblendenmechanismus (50) angeordnet ist, der ausgebildet ist eine Blendenöffnung (55) zumindest teilweise zu schließen oder zu öffnen, so dass ein Strömungsquerschnitt für den Frischluftmassenstrom (FM) zum Anströmen des Verdichterrades (13) zumindest über einen Teilbereich variabel einstellbar ist;
- der Irisblendenmechanismus (50) mehrere Lamellen (52) aufweist, wobei
- jede Lamelle (52) zumindest einen ersten und einen zweiten Lamellenabschnitt (56, 57) aufweist,
- jede Lamelle (52) für eine Drehlagerung an einem feststehenden Lagerteil ein Lagerelement (59) aufweist, welches in einem Lagerabschnitt in einem Endbereich des ersten Lamellenabschnitts (56) angeordnet ist, und
- jede Lamelle (52) ein Betätigungselement (58) aufweist, welches in einem dem Lagerabschnitt gegenüberliegenden, in einem Endbereich des zweiten Lamellenabschnitts (57) liegenden Betätigungsbereich angeordnet ist,
**dadurch gekennzeichnet, dass** zumindest zwischen dem ersten Lamellenabschnitt (56) und dem zweiten Lamellenabschnitt (57) der jeweiligen Lamelle (52) ein Versatz (61) in zu einer Haupterstreckungsebene der Lamelle senkrechten Richtung ausgebildet ist.

2. Radialverdichter (30) nach Anspruch 1, wobei der Versatz (61) der Lamellenabschnitte (56, 57) zueinander, in zu einer Haupterstreckungsebene der Lamelle senkrechten Richtung, durch eine oder mehrere Kröpfungen (60) gebildet ist.

3. Radialverdichter (30) nach Anspruch 2, wobei jede Lamelle (52) als Umformteil ausgebildet ist.

4. Radialverdichter (30) nach Anspruch 1, wobei der Versatz (61) durch einen oder mehrere Stufenabsätze (66) gebildet ist.

5. Radialverdichter (30) nach Anspruch 4, wobei der erste Lamellenabschnitt (56) und der zweite Lamellenabschnitt (57) über zumindest einen Mittelteil (67) der jeweiligen Lamelle (52) verbunden sind, wobei der zumindest eine Mittelteil (67) eine größere Wandstärke als der erste und der zweite Lamellenabschnitt (56, 57) aufweist.

6. Radialverdichter (30) nach Anspruch 5, wobei der zumindest eine Mittelteil (67) eine doppelte Wandstärke im Vergleich zu dem ersten oder dem zweiten Lamellenabschnitt (56, 57) aufweist.

7. Radialverdichter (30) nach einem der Ansprüche 4 bis 6, wobei jede Lamelle (52) als Spritzgussteil hergestellt ist.

8. Radialverdichter (30) nach einem der vorhergehenden Ansprüche, wobei die Lamellen (52) derart angeordnet sind, dass zwischen den Lamellen (52) beim Schließen und Öffnen der Blendenöffnung (55) ein im Wesentlichen konstantes Spiel (68) ausgebildet ist.

9. Radialverdichter (30) nach einem der vorhergehenden Ansprüche, wobei durch den Versatz (61) jeder Lamelle (52) ein Endanschlag (64) zum Definieren einer minimalen Öffnungsweite einer Blendenöffnung (55) des Irisblendenmechanismus (50) gebildet ist.

10. Lamelle (52) für einen Irisblendenmechanismus (50) eines Radialverdichters (30) gemäß einem der Ansprüche 1 bis 9, wobei
- die Lamelle (52) zumindest einen ersten und einen zweiten Lamellenabschnitt (56, 57) aufweist,
- die Lamelle (52) für eine Drehlagerung an einem feststehenden Lagerteil ein Lagerelement (59) aufweist, welches in einem Lagerabschnitt in einem Endbereich des ersten Lamellenabschnitts (56) angeordnet ist, und
- die Lamelle (52) ein Betätigungselement (58) aufweist, welches in einem dem Lagerabschnitt gegenüberliegenden, in einem Endbereich des zweiten Lamellenabschnitts (57) liegenden Betätigungsbereich angeordnet ist,
**dadurch gekennzeichnet, dass** zumindest zwischen dem ersten und zweiten Lamellenabschnitt (56, 57) der Lamelle (52) ein Versatz (61), in zu einer Haupterstreckungsebene der Lamelle senkrechten Richtung, ausgebildet ist.

11. Aufladevorrichtung (1) für eine Brennkraftmaschine, wobei die Aufladevorrichtung (1) einen Radialverdichter (30) nach einem der Ansprüche 1 bis 9 aufweist und wobei die Aufladevorrichtung (1) als Abgasturbolader oder als ein elektromotorisch betriebener Lader oder als ein über eine mechanische Kopplung mit dem Verbrennungsmotor betriebener Lader ausgebildet ist.

## Claims

1. Radial compressor (30) for a charging device of an internal combustion engine, having
- a bearing arrangement (40), in which a rotor shaft (14) is rotatably mounted;
- a compressor wheel (13), which is arranged in a compressor housing (31) and is arranged for conjoint rotation on the rotor shaft (14); and
- a fresh-air supply channel (36) for conducting a fresh-air mass flow (FM) to the compressor wheel (13), wherein
- an iris diaphragm mechanism (50) is arranged upstream of the compressor wheel (13) and is configured to at least partially close or open a diaphragm aperture (55) such that a flow cross section for the fresh-air mass flow (FM), for flow against the compressor wheel (13), is able to be set variably at least over a partial region;
- the iris diaphragm mechanism (50) has multiple lamellae (52), wherein
- each lamella (52) has at least one first and one second lamella portion (56, 57),
- each lamella (52) has a bearing element (59) for rotational mounting on a fixed bearing part, which bearing element is arranged in a bearing portion in an end region of the first lamella portion (56), and
- each lamella (52) has an actuation element (58) which is arranged in an actuation region, which actuation region is situated opposite the bearing portion and in an end region of the second lamella portion (57),
**characterized in that** an offset (61) is formed in a direction perpendicular to a main extent plane of the lamella at least between the first lamella portion (56) and the second lamella portion (57) of the respective lamella (52).

2. Radial compressor (30) according to Claim 1, wherein the offset (61) of the lamella portions (56, 57) with respect to one another in a direction perpendicular to a main extent plane of the lamella is formed by one or more cranked formations (60).

3. Radial compressor (30) according to Claim 2, wherein each lamella (52) is designed as a formed part.

4. Radial compressor (30) according to Claim 1, wherein the offset (61) is formed by one or more step shoulders (66).

5. Radial compressor (30) according to Claim 4, wherein the first lamella portion (56) and the second lamella portion (57) are connected via at least one middle part (67) of the respective lamella (52), wherein the at least one middle part (67) has a larger wall thickness than the first and the second lamella portion (56, 57).

6. Radial compressor (30) according to Claim 5, wherein the at least one middle part (67) has twice the wall thickness in comparison with the first or the second lamella portion (56, 57).

7. Radial compressor (30) according to one of Claims 4 to 6, wherein each lamella (52) is produced as an injection-moulded part.

8. Radial compressor (30) according to one of the preceding claims, wherein the lamellae (52) are arranged in such a way that a substantially constant clearance (68) is formed between the lamellae (52) during closure and opening of the diaphragm aperture (55) .

9. Radial compressor (30) according to one of the preceding claims, wherein an end stop (64) for defining a minimum opening width of a diaphragm aperture (55) of the iris diaphragm mechanism (50) is formed by the offset (61) of each lamella (52).

10. Lamella (52) for an iris diaphragm mechanism (50) of a radial compressor (30) according to one of Claims 1 to 9, wherein
- the lamella (52) has at least one first and one second lamella portion (56, 57),
- the lamella (52) has a bearing element (59) for rotational mounting on a fixed bearing part, which bearing element is arranged in a bearing portion in an end region of the first lamella portion (56), and
- the lamella (52) has an actuation element (58) which is arranged in an actuation region, which actuation region is situated opposite the bearing portion and in an end region of the second lamella portion (57),
**characterized in that** an offset (61) is formed in a direction perpendicular to a main extent plane of the lamella at least between the first lamella portion and second lamella portion (56, 57) of the lamella (52).

11. Charging device (1) for an internal combustion engine, wherein the charging device (1) has a radial compressor (30) according to one of Claims 1 to 9, and wherein the charging device (1) is designed as an exhaust-gas turbocharger or as an electromotively operated charger or as a charger operated via a mechanical coupling to the internal combustion engine.

## Revendications

1. Compresseur radial (30) pour un dispositif de suralimentation d'un moteur à combustion interne, présentant
- un ensemble de paliers (40), dans lequel un arbre de rotor (14) est monté rotatif ;
- une roue de compresseur (13) disposée dans un carter de compresseur (31), laquelle est disposée de manière solidaire en rotation sur l'arbre de rotor (14) ; et
- un canal d'alimentation en air frais (36) pour diriger un flux massique d'air frais (FM) vers la roue de compresseur (13), dans lequel
- un mécanisme de diaphragme à iris (50) est disposé en amont de la roue de compresseur (13), lequel mécanisme est réalisé pour fermer ou ouvrir au moins partiellement une ouverture de diaphragme (55), de sorte qu'une section transversale d'écoulement du flux massique d'air frais (FM) pour l'arrivée d'écoulement sur la roue de compresseur (13) puisse être réglée de manière variable au moins sur une région partielle ;
- le mécanisme de diaphragme à iris (50) présente plusieurs lamelles (52), dans lequel
- chaque lamelle (52) présente au moins une première et une deuxième partie de lamelle (56, 57),
- chaque lamelle (52) présente un élément de palier (59) pour un montage à rotation sur une pièce de palier fixe, lequel élément de palier est disposé dans une partie de palier dans une région d'extrémité de la première partie de lamelle (56), et
- chaque lamelle (52) présente un élément d'actionnement (58), lequel est disposé dans une région d'actionnement opposée à la partie de palier et située dans une région d'extrémité de la deuxième partie de lamelle (57),
**caractérisé en ce qu'**un décalage (61) dans une direction perpendiculaire à un plan d'étendue principal de la lamelle est réalisé au moins entre la première partie de lamelle (56) et la deuxième partie de lamelle (57) de la lamelle (52) respective.

2. Compresseur radial (30) selon la revendication 1, le décalage (61) des parties de lamelle (56, 57) l'une par rapport à l'autre, dans une direction perpendiculaire à un plan d'étendue principal de la lamelle, étant formé par un ou plusieurs coudes (60).

3. Compresseur radial (30) selon la revendication 2, chaque lamelle (52) étant réalisée sous forme de pièce moulée.

4. Compresseur radial (30) selon la revendication 1, le décalage (61) étant formé par un ou plusieurs épaulements étagés (66).

5. Compresseur radial (30) selon la revendication 4, la première partie de lamelle (56) et la deuxième partie de lamelle (57) étant reliées par le biais d'au moins une pièce centrale (67) de la lamelle (52) respective, l'au moins une pièce centrale (67) présentant une plus grande épaisseur de paroi que la première et la deuxième partie de lamelle (56, 57).

6. Compresseur radial (30) selon la revendication 5, l'au moins une pièce centrale (67) présentant une épaisseur de paroi double par comparaison avec la première ou la deuxième partie de lamelle (56, 57).

7. Compresseur radial (30) selon l'une des revendications 4 à 6, chaque lamelle (52) étant fabriquée sous forme de pièce moulée par injection.

8. Compresseur radial (30) selon l'une des revendications précédentes, les lamelles (52) étant disposées de telle sorte qu'un jeu (68) sensiblement constant soit réalisé entre les lamelles (52) lors de la fermeture et de l'ouverture de l'ouverture de diaphragme (55) .

9. Compresseur radial (30) selon l'une des revendications précédentes, une butée de fin de course (64) servant à la définition d'une largeur d'ouverture minimale d'une ouverture de diaphragme (55) du mécanisme de diaphragme à iris (50) étant formée par le décalage (61) de chaque lamelle (52).

10. Lamelle (52) pour un mécanisme de diaphragme à iris (50) d'un compresseur radial (30) selon l'une des revendications 1 à 9,
- la lamelle (52) présentant au moins une première et une deuxième partie de lamelle (56, 57),
- la lamelle (52) présentant un élément de palier (59) pour un montage à rotation sur une pièce de palier fixe, lequel élément de palier est disposé dans une partie de palier dans une région d'extrémité de la première partie de lamelle (56), et
- la lamelle (52) présentant un élément d'actionnement (58), lequel est disposé dans une région d'actionnement opposée à la partie de palier et située dans une région d'extrémité de la deuxième partie de lamelle (57),
**caractérisée en ce qu'**un décalage (61) dans une direction perpendiculaire à un plan d'étendue principal de la lamelle est réalisé au moins entre la première et la deuxième partie de lamelle (56, 57) de la lamelle (52).

11. Dispositif de suralimentation (1) pour un moteur à combustion interne, le dispositif de suralimentation (1) présentant un compresseur radial (30) selon l'une des revendications 1 à 9 et le dispositif de suralimentation (1) étant réalisé sous forme de turbocompresseur à gaz d'échappement ou sous forme de compresseur à suralimentation fonctionnant par moteur électrique ou sous forme de compresseur à suralimentation fonctionnant par le biais d'un accouplement mécanique au moteur à combustion interne.
